# EUROPEAN PATENT SPECIFICATION

(11) **EP 1 285 531 B1**
(45) Date of publication and mention of the grant of the patent: **15.03.2006**
(21) Application number: 01947260.4
(22) Date of filing: 05.05.2001
(51) Int. Cl.: H04N 5/445, H04N 5/44

(54) **SYSTEM FOR OPERATING A CONSUMER ELECTRONICS APPLIANCE**
SYSTEM ZUM BETREIBEN EINES UNTERHALTUNGSELEKTRONIKGERÄTES
SYSTEME D'EXPLOITATION D'APPAREILS ELECTRONIQUES DE GRANDE CONSOMMATION

(30) Priority: 19.05.2000 DE 10024895
(43) Date of publication of application: 26.02.2003
(73) Proprietor: Thomson Licensing, 92100 Boulogne Billancourt (FR)
(72) Inventor: BULLINGER, Werner, 78056 Villingen-Schwenningen (DE); ROTHE, Oliver, 78166 Donaueschingen (DE)
(74) Representative: Rossmanith, Manfred
(86) International application number: PCT/EP2001/005116
(87) International publication number: WO 2001/091457

(56) References cited:
- EP-A- 0 840 504
- US-A- 5 999 228

## Description

The starting point taken for the invention is a system for operating a consumer electronics appliance in accordance with the precharacterizing clause of Claim 1. The appliance is preferably a television receiver, a video recorder or a DVD player. The invention is not restricted to the aforementioned appliances, however.

With such appliances, it is known practice to display on a screen a so-called menu for guiding and simplifying operation of the appliance. Such a menu, which, in the case of a video recorder, is generally displayed on the screen of the connected television receiver, gives the user a list, in particular, of the controllable parameters, a selection option for the respective parameter to be controlled, confirmation or an acknowledgement of the setting or change made to a parameter, a guide for programming a video recorder, an indication of entries which are still missing, confirmation of the completeness of programming which has been performed etc. The menu may also contain a list of the transmissions from a particular broadcasting station for a particular day, and the menu can be used to select and program these transmissions, for example to record them on a video recorder. The menu can also display a number of transmissions which have recently been received and stored and which are available for immediate showing.

Such menus may differ very greatly in terms of their structure, the number of parameters displayed and the difficulty of using them. In practice, this causes the following difficulty:

The different desires, demands and capabilities of the users mean that there is generally not a menu which meets the demands of all potential users. In practice, by way of example, a particular menu may be far too complicated and incomprehensible for a first, technically inexperienced user, yet may still be too simple for a second, technically experienced user, because, by way of example, the latter desires further refined setting options or would like to use further services offered, such as picture-in-picture display (PIP), teletext etc.

To overcome this difficulty, EP 0 737 006 discloses the practice of providing the user of the appliance with the option to change a particular menu according to his desires and capabilities. By operating appropriate buttons in an existing menu, the user can then remove the parameters which are not used or inconvenience him, or can add new parameters which are missing but are important for him. This allows a particular menu to be individually matched to the respective requirements and capabilities of the user. On the other hand, changing an existing menu again requires a certain level of experience and competence, which cannot be taken for granted for some users.

US 5,999,228 discloses a television receiver set which is provided with a single customized menu for operating the television receiver. In addition, a method of creating such a customized menu is described, which can be called up by operating a dedicated button on the remote control of the television receiver set.

On this basis, the invention makes it possible to develop a system of the type described such that provision of the optimum menu for a particular user is made more convenient and simpler.

With the solution according to the invention, a number of menus of different structure, scope and degree of difficulty are permanently stored which, in practice, cover roughly the entire scale of requirement and difficulty for the menus. The user is then relieved of the task of composing a particular menu or of changing a prescribed menu. He need merely select from a number of permanently stored menus the one which he feels is most suited to his requirements. Preferably, he will select a menu for which he recognizes that the next simplest menu is too simple for him and the next most extensive menu is too difficult or unclear for him. The invention can be used generally for all appliances displaying a menu graphically, in particular for such appliances as are operated alternately by a number of users having different capabilities and requirements.

Preferably, a menu button on the control unit of the appliance, for example on a remote control unit, is allocated to a respective menu, and operating said menu button retrieves the menu associated with the button from the memory of the appliance and displays it on the screen for the purpose of operating the appliance. Instead of the buttons, it is also possible to provide a selector switch whose different positions, marked by latch positions, for example, correspond to the individual menus.- The buttons and/or the various positions of the selector switch are preferably associated with various users so that a user can conveniently and quickly select the respective menu intended for him.

In one embodiment of the invention, control buttons which are already present on the remote control unit anyway for conventional functions are utilized as menu buttons. In this case, by way of example, the control buttons which are provided anyway are utilized once when the appliance is turned on, in order to retrieve the menu associated with the user. In this context, a menu may be provided which makes it possible to change over to the menu of another user while the appliance is operating. It is also possible to provide an additional operating means, such as a slider switch, which can be used to change over the buttons manually between the conventional functions and the menu button function. It is also possible to change over between menus associated with various users by operating a plurality of buttons.

In another embodiment of the invention, the menu buttons are formed by buttons which are provided in addition to the control buttons provided hitherto on the remote control unit and are then used only for selecting the respective menu. Like some buttons for conventional functions, the menu buttons can have different colours, preferably red, blue, green and yellow. It has been found that most people are able to memorize a colour better than a number or a letter, for example.

Preferably, when the appliance is turned on using a separate button without operating one of the menu buttons, a particular menu is always automatically retrieved and displayed, for example the simplest menu, provided for children. In this case, even with the appliance turned on, the menu chosen for operation and displayed on the screen can be modified by operating one of the buttons without turning off the appliance.

In one development of the invention, the appliance contains means for automatically recognizing the identity of the respective user without the need for one of the menu buttons to be operated for this purpose. The appliance then automatically outputs the menu associated with this user from the memory and displays this menu on the screen. This solution has the advantage that the user no longer needs to operate a menu button to display his associated menu, and an unauthorized person cannot retrieve this menu and display it. There are various options for automatic recognition of the identity of the user.

The appliance can contain means for voice analysis for the respective user and can use them to recognise the speaker by comparing the user's speech with the stored voice samples for all users. Alternatively, the control unit can have means for evaluating a fingerprint and for transmitting a signal representing the fingerprint to the appliance. In addition, the appliance can contain means for recognizing the respective user by comparing the user's fingerprint with the stored fingerprints for all users. The identity of the respective user may also be recognized by a so-called eye detection system, since evaluation of the eyes also permits sufficiently reliable identification of the user. The identity of the user may also be ascertained by a so-called face detection system in a corresponding manner.

In another alternative, the means for recognizing the identity of the respective user are formed by a so-called electronic key system, in which the user inputs into the control unit an electronic key which identifies him. This can be done manually or by means of radio signals transmitted, by way of example, by a bracelet, a necklace or a ring. Similarly, other person-related equipment outputting IR or radio signals may be used for this purpose, such as a mobile telephone or a laptop. The solution based on radio signals has the advantage that the user does not need to operate a menu button and cannot inadvertently choose an incorrect menu either. The various menus stored in the memory of the appliance can actually be stored unmodifiably, for example in a ROM, in the appliance when the appliance is manufactured. It is likewise possible for the various menus to be compiled individually by the user according to his wishes and input into the memory of the appliance. In this context, the various menus can be compiled and input into the memory of the appliance using a computer connected to the appliance.

In another development of the invention, the appliance contains means which ascertain the use behaviour of a particular user over a relatively long period of time, store it and, on request, display it on the screen. This variant makes it possible to monitor oneself and also to monitor the viewing behaviour of other people, for example for the purposes of preventing misuse or for child protection. These means are able to measure and add up the active turned-on time of the appliance in each case after the appliance is first turned on, the number of hours for which the appliance is turned on within a particular period of time, such as one day, the frequency with which a particular type of programme is turned on, such as sport, crime fiction or nature programmes, over a relatively long period of time. The means can also establish and store the teletext pages most frequently retrieved and displayed. They can also establish and store the times of day at which the appliance has been turned on over a relatively long period of time. The ascertained result relating to the use behaviour of a particular user may also be used to offer to the user as preferences in the displayed menu such programme types as he has predominantly chosen in the past according to the use behaviour ascertained. Such a solution may be useful if a number of transmissions are available at a particular time for a particular type of programme. This may be the case if, by way of example, a large number of transmissions have been transmitted, possibly compressed over time, and stored in the appliance in the past.

A computer can also be used for automatically offering to a particular user, on the basis of the use behaviour ascertained, the menu which is recognized as being most suitable for him, irrespective of which menu the user himself has chosen.

The display may appear not only on the screen of a cathode ray tube but also on- another display unit, such as an LCD or plasma screen.

To improve understanding, a plurality of embodiments of the invention are explained below using a few illustrative embodiments with the aid of the drawing, in which:
- Figure 1: shows the fundamental design of an appliance produced in accordance with the invention,
- Figure 2: shows a remote control unit on which the control buttons can be changed over between normal mode and menu selection,
- Figure 3: shows a remote control unit having means for taking a fingerprint,
- Figure 4: shows a remote control unit for voice input,
- Figure 5: shows a remote control unit for a smart card,
- Figure 6: shows a remote control unit having a slider control for selecting the various menus,
- Figure 7: shows a remote control unit for a face or eye detection system,
- Figures 8: and 9 show two different menus,
- Figure 10: shows an evaluation of the user behaviour of a number of users, and
- Figure 11: shows an example of a programme suggestion on the basis of the user behaviour shown in Figure 9.

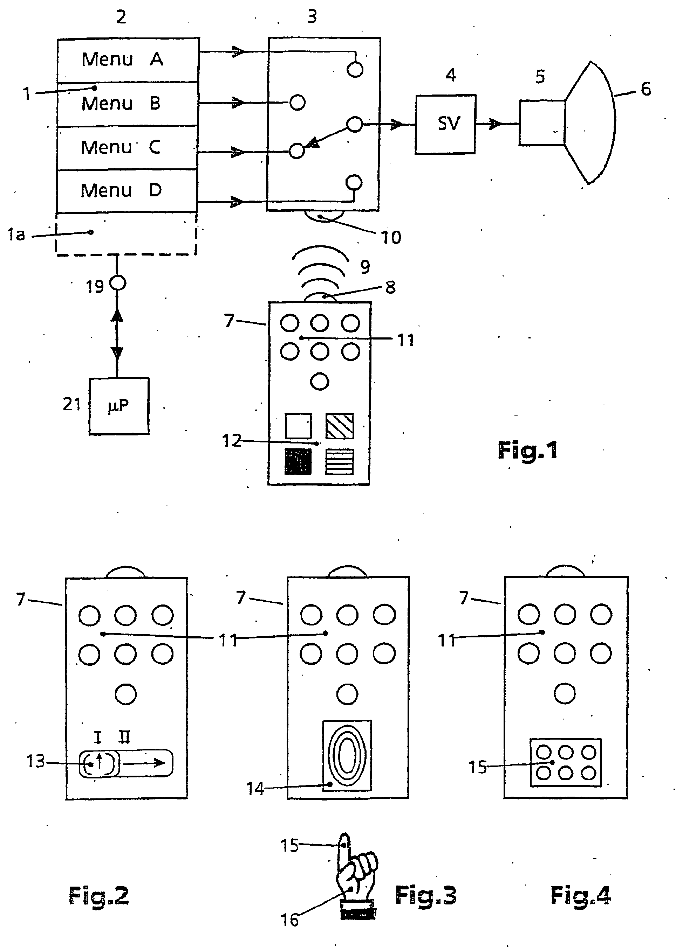

Figure 1 is a simplified illustration of parts of a television receiver or of a system containing a video recorder and a connected television receiver. Four memory locations 1 in a memory 2 store four memories A to D of different structure, with different numbers of menu items and with a different degree of difficulty. The menus can actually be stored when the appliance is produced, for example in a ROM. They may also be input into the memory by the user of the appliance on the basis of individual features, however. A symbolically illustrated switch 3 can be used to retrieve the individual menus A to D from the memory locations 1 by addressing the memory locations 1 and to supply them via a signal processing circuit (SV) 4 to a picture tube 5 and display them on the screen 6 thereof. The circuit means for normal television picture reproduction, for example on the basis of a signal from a transmitter or a video recorder, are not shown for reasons of clarity.

The appliance is operated using a remote control unit 7 which sends an IR remote control signal 9 from an IR transmission diode 8 to an IR reception diode 10 on the appliance. Instead of the IR transmission, radio transmission with an RF carrier modulated with the remote control signal may also be used. The remote control unit 7 contains not only the customary control buttons 11 but also four menu buttons 12 with the colours red, blue, green, yellow, which are used only for menu selection. Each button 12 is associated with one of the menus A to D. Pressing one of the menu buttons 12 retrieves the menu associated with this button from the memory 2 and displays it on the screen 6. The menu buttons 12 are associated with various people in the same household, for example the father, the mother, the child and the grandma. This allows, by way of example, the child or another inexperienced person to retrieve and display a simple menu for display on the screen 6 and operation of the appliance, and allows a more experienced user to retrieve and display a more complicated menu containing a number of menu items. The change from one user or menu to another can be displayed by means of brief overlay of, for example, a programme number, after changeover. When the appliance has been turned on and one of the menu buttons 12 is pressed, the menu associated with this button is retrieved from the memory 2 and displayed on the screen 6 instead of the menu displayed previously, with the appliance remaining turned on. This means that the appliance can successively display the menus for various users without being turned off.

In Figure 2, the remote control unit 7 does not contain the additional menu buttons 12 as shown in Figure 1. Instead, the remote control unit 7 is provided with a slider switch 13 which can be used to change over the function of the control buttons 11 which are present anyway. In position I of the slider switch 13, the control buttons 11 are used for their customary functions for operating the appliance. In position II, the control buttons 11 or some of them are changed over to the menu button function described in Figure 1.

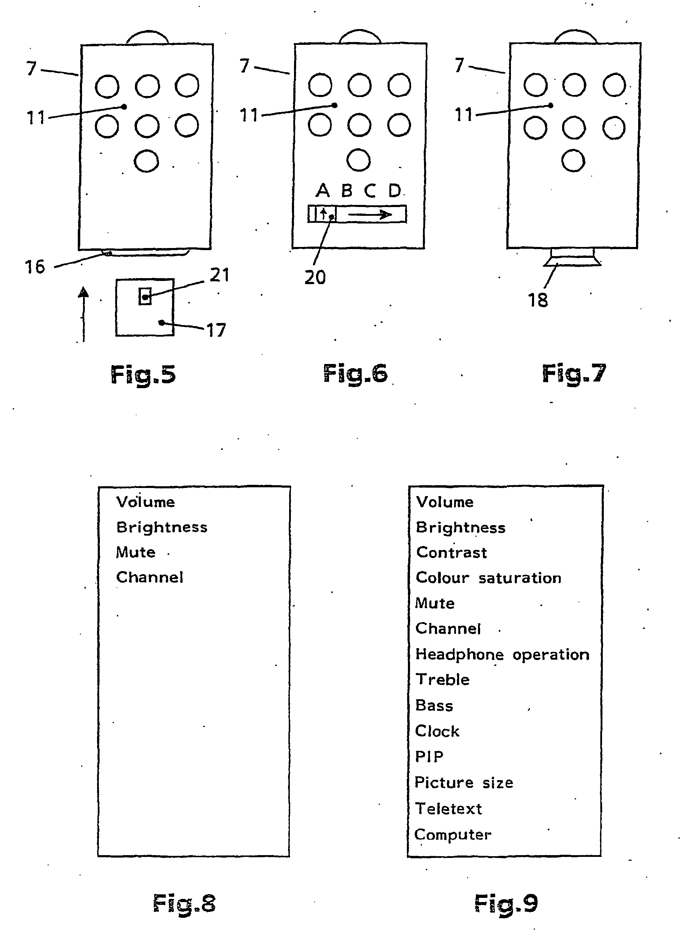

Figure 3 shows a remote control unit 7 with the described evaluation of a fingerprint. The remote control unit 7 contains a finger hollow 14 of the size of a finger on a human hand, to which an evaluation unit within the remote control unit 7 is connected. The fingertip 15 of a human hand 16 is placed onto the finger hollow 14. Automatically or after operation of a button, a signal representing the fingerprint is generated and is transmitted to the IR reception diode 10 in the manner described. The appliance compares the signal representing the fingerprint with the corresponding stored signals for all potential users and recognizes the- respective user from this. Alternatively, it is possible for the fingerprint to be evaluated in the remote control unit 7, and for a signal to be transmitted which identifies the user.

In Figure 4, the remote control unit 7 is provided with a microphone arranged behind a perforated wall part 15. The microphone produces a voice signal typical of the respective user, which is again transmitted to the appliance. This signal is compared with the stored voice signals for all users, and the respective user is ascertained in this way. This solution is particularly advantageous when such a system is provided with a microphone and voice analysis for voice control of the appliance anyway. This system can then be selectively used for controlling the various functions of the appliance within the context of voice control and for recognizing the respective user and outputting and displaying the menu associated with this user within the context of speaker recognition. -In this illustrative embodiment, it is also possible for the speaker recognition to be carried out in the remote control unit 7 and to be transmitted in the signal which identifies the user.

Figure 5 shows a remote control unit 7 having means of evaluating a smart card identifying the respective user. The remote control unit 7 additionally contains a slot 16 into which the respective user pushes his smart card 17, containing a chip 21, which identifies him. The remote control unit 7 evaluates the smart card 17 and produces a signal which identifies the user, and which is again used in the appliance for selecting the menu associated with this user.

Figure 6 shows a remote control unit 7 on which the individual menus are not retrieved and displayed by the control buttons 11 which are present anyway or by additional control buttons 12. Instead, a selector switch 20 with four latch positions corresponding to the individual menus A to D is provided. This selector switch 20 thus has roughly the same function as the separate menu buttons 12 in Figure 1.

Figure 7 shows a remote control unit 7 for the described face or eye detection system. The remote control unit 7 contains a mini-camera 18 which is pointed towards the face or an eye of the respective user and produces a signal identifying the user by evaluating the face or eye. This signal is again supplied to the appliance by means of the IR remote control signal 9, and there it is evaluated in the manner described.

Figure 8 shows a relatively simple menu containing as setting parameters only basic functions such as "Volume", "Brightness", "Mute" and "Channel".

Figure 9 shows a more complicated or refined menu containing a large number of further displayed use parameters, said menu being designed for a more experienced user wishing to control a series of further parameters or to use additional services.

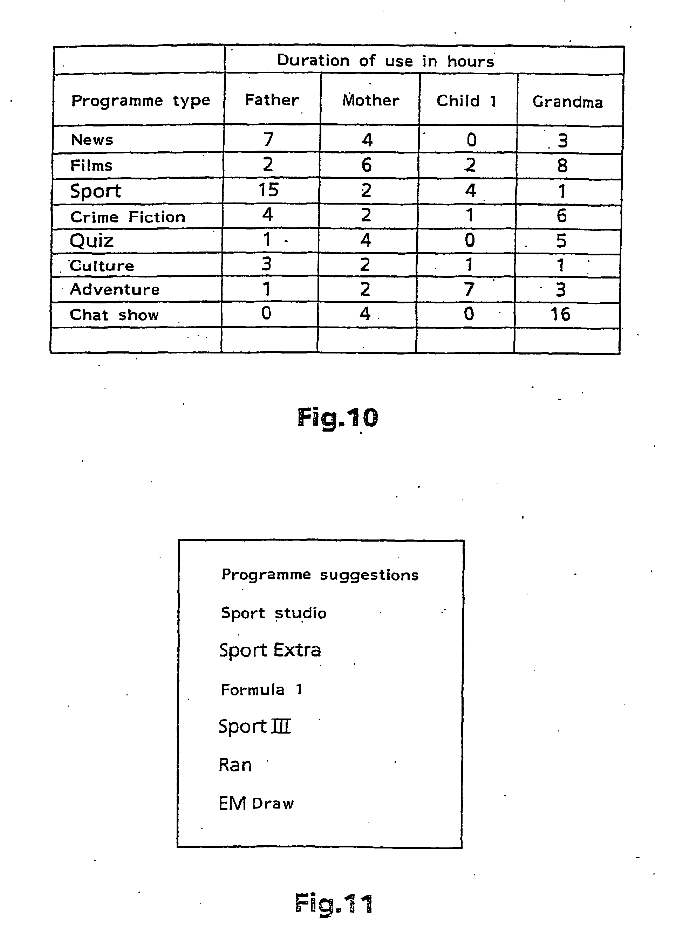

Figure 10 shows an example of the evaluation of the user behaviour, that is to say the number of hours for which the individual family members have viewed particular programme types within a relatively long time of, by way of example, one week. The table shown can be displayed on the screen 6, printed on a printer or else held in a memory of the appliance. Evaluation can serve a number of purposes. It can be used to monitor and possibly correct the,user behaviour, in particular in the case of children, in order to correct and possibly change the programme types viewed. The evaluation may also be used in a processor of the appliance first to offer to the individual users, in the menu, predominantly the programme types which the appliance is currently able to show and which the user has predominantly chosen in the past, in accordance with the evaluation. By way of example, seven different types of sport can be offered to the father of the family from previously recorded transmissions for selective viewing.

Figure 11 shows a menu, displayed on the screen 6, offering currently available programmes specifically for a particular person, in this case the father from Figure 10. This offer makes use of two solutions which have been described. The offer itself is based initially on the user behaviour shown in Figure 10, according to which the father predominantly prefers sport transmissions. This user behaviour is thus used to offer various sport transmissions currently available for showing, as shown in Figure 11. The transmissions themselves have preferably been received and stored in the course of the last few days and, by way of example, represent all or the most important sport transmissions from the last few days.

For this solution, a computer may preferably be used. The computer is connected to the appliance and reads out the previously ascertained user behaviour, held in the memory 2, as shown in Figure 10, and uses this user behaviour to compile the programme offer shown in Figure 11, which is oriented specifically to one user. This offer is then read into the optional register la (shown in dashes in Figure 1) by a computer 21 via a connection 19 of the appliance and is then available for display on the screen 6. Alternatively, it is conceivable for a microprocessor which is already present in the television set and is required for controlling the functions of the television set anyway to be used for this purpose.

### List of reference numerals

- 1: Memory location
- 2: Memory
- 3: Switch
- 4: Signal processing circuit
- 5: Picture tube
- 6: Screen
- 7: Remote control unit
- 8: Transmission diode
- 9: IR remote control signal
- 10: IR reception diode
- 11: Control buttons
- 12: Menu buttons
- 13: Slider switch
- 14: Finger hollow
- 15: Wall part
- 16: Slot
- 17: Smart card
- 18: Mini-camera
- 19: Connection
- 20: Selector switch
- 21: Computer

## Claims

1. System for operating a consumer electronics appliance using a menu, which can be retrieved from a memory and displayed on a screen, wherein the menu contains a plurality of menu items corresponding to various operating parameters, wherein the menu items are selectable by a user to build a customized menu while the menu items are displayed on the screen,
**characterized in that** the memory (2) is adapted to store a plurality of customized menus containing different kinds of menu items, and **in that** means for selecting an individual customized menu are provided.

2. System according to Claim 1, **characterized in that** the means for selecting an individual customized menu comprise one or a plurality of menu buttons (12) on the control unit (7) individually associated with one customized menu, and **in that** upon actuation of one specific menu button the associated customized menu is retrieved from the memory (2) and displayed on the screen (6).

3. System according to Claim 1, **characterized in that** a particular menu is always automatically retrieved and displayed when the appliance is turned on without operating one of the menu buttons (12).

4. System according to Claim 1 or 3, **characterized in that** a menu is provided which contains a menu item allowing changeover to the menu of another user during operation.

5. System according to Claim 2, **characterized in that** the menu buttons (12) are formed by buttons (12) which are provided in addition to the conventional control buttons provided hitherto on the remote control unit (7).

6. System according to Claim 5, **characterized in that** the additional menu buttons (12) have different colours.

7. System according to Claim 1, **characterized in that** a particular menu can be retrieved and displayed on the screen (6) by inserting a smart card (17) into the control unit (7) of the appliance.

8. System according to Claim 1, **characterized in that** the appliance comprises identification means for automatically identifying a user, and means for associating each stored customized menu with a user, and **in that** means are provided to automatically display the customized menu associated with the identified user on the screen (6).

9. System according to Claim 8, **characterized in that** the identification means include means (15) for voice analysis to identify a user.

10. System according to Claim 8, **characterized in that** the identification means are arranged on the control unit (7) and comprise means for analysing a fingerprint to identify a user.

11. System according to Claim 8, **characterized in that** the means (18) for recognizing the identity of the respective user are formed by an eye detection system (18).

12. System according to Claim 8, **characterized in that** the identification means (18) include a face detection system to identify a user.

13. System according to Claim 8, **characterized in that** the identification means an electronic key system (16, 17) to identify a user, by means of an electronic key (17) operatively connected to the control unit (7).

14. System according to Claim 1, **characterized in that** the plurality of customized menus can be compiled and input into the memory (1a) of the appliance using a computer (21) being connected to the appliance for data exchange purposes.

15. System according to Claim 1, **characterized in that** means for monitoring a user behaviour are provided, and **in that** the system comprises generating means for automatically creating customized menu based on the monitored user behaviour.

## Patentansprüche

1. System zur Bedienung eines Gerätes der Unterhaltungselektronik mit Anwendung eines Menues, das einem Speicher entnommen und auf einem Bildschirm wiedergegeben werden kann, wobei das Menue mehrere Menuepunkte entsprechend verschiedenen Betriebsparametern enthält und die Menuepunkte durch einen Benutzer zum Aufbau eines benutzerindividuellen Menues auswählbar sind, während die Menuepunkte auf dem Bildschirm wiedergegeben werden,
**dadurch gekennzeichnet, dass**
der Speicher (2) mehrere benutzerindividuelle Menues mit verschiedenen Arten von Menuepunkten speichert und dass Mittel zur Auswahl eines benutzerindividuellen Menues vorgesehen sind.

2. System nach Anspruch 1, **dadurch gekennzeichnet, dass** die Mittel zur Auswahl eines benutzerindividuellen Menues einen oder mehrere Menuetasten (12) auf der Fernbedieneinheit (7) enthält, die einzeln jeweils einem benutzerindividuellen Menue zugeordnet sind, und dass bei Betätigung einer Taste für ein benutzerindividuelles Menue das zugehörige, benutzerindividuelle Menue aus dem Speicher (2) aufgerufen und auf dem Bildschirm (6) wiedergegeben wird.

3. System nach Anspruch 1, **dadurch gekennzeichnet, dass** ein bestimmtes Menue ohne Betätigung einer der Menuetasten (12) immer dann automatisch aufgerufen und wiedergegeben wird, wenn das Gerät eingeschaltet wird.

4. System nach Anspruch 1 oder 3, **dadurch gekennzeichnet, dass** ein Menue vorgesehen ist, das einen Menuepunkt enthält, der die Umschaltung auf das Menue eines anderen Benutzers während des Betriebs ermöglicht.

5. System nach Anspruch 2, **dadurch gekennzeichnet, dass** die Menuetasten (12) durch Tasten (12) gebildet sind, die zusätzlich zu den konventionellen, bisher auf der Fernbedieneinheit (7) vorgesehenen Tasten vorgesehen sind.

6. System nach Anspruch 5, **dadurch gekennzeichnet, dass** die zusätzlichen Menuetasten (12) unterschiedliche Farben aufweisen.

7. System nach Anspruch 1, **dadurch gekennzeichnet, dass** ein bestimmtes Menue aufrufbar und durch Einschieben einer Chipkarte (17) in die Bedieneinheit (7) des Gerätes auf dem Bildschirm (6) anzeigbar ist.

8. System nach Anspruch 1, **dadurch gekennzeichnet, dass** das Gerät Identifikationsmittel für die automatische Identifikation eines Benutzers und Mittel zur Zuordnung jedes gespeicherten benutzerindividuellen Menues mit einem Benutzer enthält und dass Mittel zur automatischen Anzeige des benutzerindividuellen Menues für den identifizierten Benutzer auf dem Bildschirm (6) vorgesehen sind.

9. System nach Anspruch 8, **dadurch gekennzeichnet, dass** die Identifikationsmittel Mittel (15) zur Sprachanalyse zur Identifizierung eines Benutzers enthalten.

10. System nach Anspruch 8, **dadurch gekennzeichnet, dass** die Identifikationsmittel auf der Bedieneinheit (7) vorgesehen sind und Mittel für eine Analyse eines Fingerabdrucks zur Identifikation eines Benutzers enthalten.

11. System nach Anspruch 8, **dadurch gekennzeichnet, dass** die Mittel (18) zur Erkennung der Identität des jeweiligen Benutzers durch ein Augendetektiersehen (18) gebildet sind.

12. System nach Anspruch 8, **dadurch gekennzeichnet, dass** die Identifikationsmittel (18) ein Gesichtsdetektiersystem zur Identifikation eines Benutzers enthalten.

13. System nach Anspruch 8, **dadurch gekennzeichnet, dass** die Identifikationsmittel ein elektronisches Schlüsselsystem (16, 17) zur Identifikation eines Benutzers durch einen elektronischen Schlüssel (17) enthalten, der wirkungsmäßig mit der Bedieneinheit (7) verbunden sind.

14. System nach Anspruch 1, **dadurch gekennzeichnet, dass** die mehreren benutzerindividuellen Menues durch einen Computer (21) zusammenstellbar und in den Speicher (1a) eines Geräts eingebbar sind, der zum Zwecke des Datenaustauschs mit dem Gerät verbunden ist.

15. System nach Anspruch 1, **dadurch gekennzeichnet, dass** Mittel zur Überwachung eines Benutzerverhaltens vorgesehen sind und dass das System Erzeugungsmittel für die automatische Erzeugung eines benutzerindividuellen Menues enthält, das auf dem überwachten Benutzerverhalten beruht.

## Revendications

1. Système pour faire fonctionner un appareil électronique de grande consommation utilisant un menu qui peut être extrait d'une mémoire et affiché sur un écran, dans lequel le menu contient plusieurs éléments de menu correspondant à divers paramètres de fonctionnement, dans lequel les éléments de menu peuvent être sélectionnés par un utilisateur pour construire un menu personnalisé pendant que les éléments de menu sont affichés sur l'écran,
**caractérisé en ce que** la mémoire (2) est conçue pour enregistrer plusieurs menus personnalisés contenant différentes sortes d'éléments de menu, et **en ce que** il comporte des moyens de sélection d'un menu individuel personnalisé .

2. Système selon la revendication 1, **caractérisé en ce que** les moyens de sélection d'un menu individuel personnalisé comportent une ou plusieurs touches de menu (12) sur la télécommande (7) individuellement associée à un menu personnalisé, et **en ce que** en appuyant sur une touche spécifique de menu, le menu personnalisé associé est extrait de la mémoire (2) et affiché sur l'écran (6).

3. Système selon la revendication 1, **caractérisé en ce qu'**un menu particulier est toujours automatiquement extrait et affiché quand l'appareil est allumé sans que l'on appuie sur des touches de menu (12).

4. Système selon la revendication 1 ou 3, **caractérisé en ce qu'**il est prévu un menu qui contient un élément de menu qui permet de passer du menu d'un utilisateur à un autre pendant le fonctionnement.

5. Système selon la revendication 2, **caractérisé en ce que** les touches de menu (12) sont constituées par des touches (12) qui sont prévues en plus des touches de commande conventionnelles prévues jusqu'à présent sur la télécommande (7).

6. Système selon la revendication 5, **caractérisé en ce que** les touches de menu supplémentaires (12) ont des couleurs différentes.

7. Système selon la revendication 1, **caractérisé en ce qu'**un menu particulier peut être extrait et affiché sur l'écran (6) en insérant une carte à puce (17) dans l'unité de commande (7) de l'appareil.

8. Système selon la revendication 1, **caractérisé en ce que** l'appareil comporte de moyens d'identification pour identifier automatiquement un utilisateur, et des moyens pour associer chaque menu personnalisé enregistré à un utilisateur, et **en ce que** des moyens sont prévus pour afficher automatiquement sur l'écran (6) le menu personnalisé associé à l'utilisateur identifié.

9. Système selon la revendication 8, **caractérisé en ce que** les moyens d'identification comprennent des moyens (15) d'analyse vocale pour identifier un utilisateur.

10. Système selon la revendication 8, **caractérisé en ce que** les moyens d'identification sont placés sur l'unité de commande (7) et comportent des moyens des moyens d'analyse d'empreinte digitale pour identifier un utilisateur.

11. Système selon la revendication 8, **caractérisé en ce que** les moyens (18) de reconnaissance de l'identité des utilisateurs respectifs sont constitués par un système de détection oculaire (18).

12. Système selon la revendication 8, **caractérisé en ce que** les moyens d'identification (18) comprennent un système de détection faciale pour identifier un utilisateur.

13. Système selon la revendication 8, **caractérisé en ce que** les moyens d'identification comprennent un système à clé électronique (16, 17) pour identifier un utilisateur à l'aide d'un clé électronique (17) connectée en fonctionnement à l'unité de commande (7).

14. Système selon la revendication 1, **caractérisé en ce que** les menus personnalisés peuvent être compilés et introduits dans la mémoire (1a) de l'appareil en utilisant un ordinateur (21) connecté à l'appareil à des fins d'échange de données.

15. Système selon la revendication 1, **caractérisé en ce que** des moyens de surveillance des habitudes d'utilisateurs sont prévus, et **en ce que** le système comporte des moyens de génération pour créer automatiquement un menu personnalisé en fonction de la surveillance des habitudes d'un utilisateur.
